# EUROPEAN PATENT SPECIFICATION

(11) **EP 1 355 076 B1**
(45) Date of publication and mention of the grant of the patent: **06.02.2008**
(21) Application number: 03252483.7
(22) Date of filing: 17.04.2003
(51) Int. Cl.: F16D 65/12

(54) **A resilient device for a splined hub-shaft connection**
Federnde Vorrichtung für eine gezahnte Naben-Wellenverbindung
Dispositif élastique pour liaison arbre-moyeu cannelée

(30) Priority: 19.04.2002 GB 0208950
(43) Date of publication of application: 22.10.2003
(73) Proprietor: Meritor Heavy Vehicle Braking Systems (UK) Limited, Cwmbran, Gwent NP44 3XU (GB)
(72) Inventor: Blewitt, Andrew John, West Pontnewydd, Cwmbran, NP44 5LL (GB); Williams, Anthony John, Garndiffaitch, NP4 8QE (GB)
(74) Representative: Gray, James

(56) References cited:
- EP-A- 1 158 197
- WO-A-01/86167
- US-A- 4 844 206
- US-A- 5 437 351

## Description

The invention relates to a resilient device for reducing the effect of play in a splined connection and is particularly, but not exclusively, concerned with a device which reduces the effect of play between an internally splined brake disc and a mating externally splined rotary drive shaft.

Where rotatable members such as a drive shaft and a brake disc are drivably interconnected by means of mating external and internal splines, play between the splines can result in a noisy interconnection. The noise problem, typically rattling, is a caused by a small amount of relative rotary movement which takes place between the members as a result of the play and which allows the mating splines to strike each other. If the clearance between the mating splines is reduced to minimise play, the rattling can substantially be prevented. However, the smaller the clearance the greater the risk of the mating splines jamming together. Therefore, it has hitherto been necessary to reach a point of compromise where the clearance is sufficient to prevent jamming and yet not so great as to lead to excessive rattling between the members. That compromise can be difficult to achieve.

EP 1158197 discloses a guide shoe spring element for the mounting of a brake disc to a wheel hub according to the preamble of claim 1. The spring element is provided with legs which project into tooth spaces and air control channels of the brake disc.

An object of the present invention is to provide a device for reducing the effect of play in a splined connection which will help to minimise the foregoing problem.

According to the invention according to claim 1 there is provided a resilient device made from a resilient sheet material, the device having a mounting portion having opposing first and second sides, and opposing first and second ends, and two flanges each bent in a first direction from the mounting portion, the flanges being substantially parallel and being spaced apart from each other by the mounting portion, the flanges and mounting portion together forming a substantially U-shaped profile, the device further including an arm bent in a second, opposite, direction from the mounting portion, through substantially 180° to lie adjacent to the mounting portion, the arm having a wavy shape having at least a crest portion and at least a trough portion, characterised in that said flanges extend from said first and second sides of the mounting portion, and said arm extends from an end of the mounting portion.

The effect of the resilient element when fitted between rotatable members is to tighten the connection between the members so that the risk of noise is minimised without substantially increasing the risk of jamming.

A device in accordance with the invention will now be described by way of example with reference to the accompanying drawings in which:-
Fig 1 is longitudinal cross-section through a transmission brake assembly incorporating a device in accordance with the invention,
Fig 2 is an end view of a brake disk of the transmission brake assembly shown in Fig 1,
Fig 3 is a cross-section through the brake disc shown in Fig 2 on line II-II in Fig 2,
Fig 4 is a end view of a device in accordance with the invention,
Fig 5 is an elevation of the device shown in Fig 4 looking in the direction of arrow V in Fig 4,
Fig 6 is an end view showing the device of Figs 4 and 5 assembled on the brake disc of Fig 2, and
Fig 7 is an elevation of the assembly shown in Fig 6 looking in the direction of arrow VII in Fig 6 with part of the brake disc broken away.

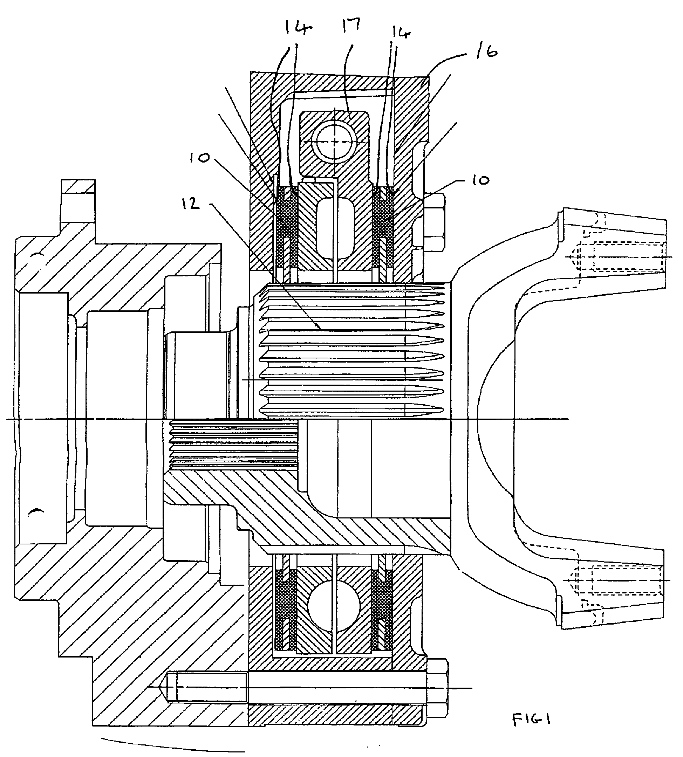

Looking at Fig 1, a transmission brake assembly for a heavy vehicle comprises a plurality of brake discs 10 drivably connected to a drive transmission shaft 12 by splines. The discs 10 cooperate with brake surfaces 14 on a casing 16 and on a ball and ramp actuator 17 of the transmission brake. To brake the shaft 12, the brake discs 10 are moved axially along the splines against the brake surfaces 14 by the actuator 17.

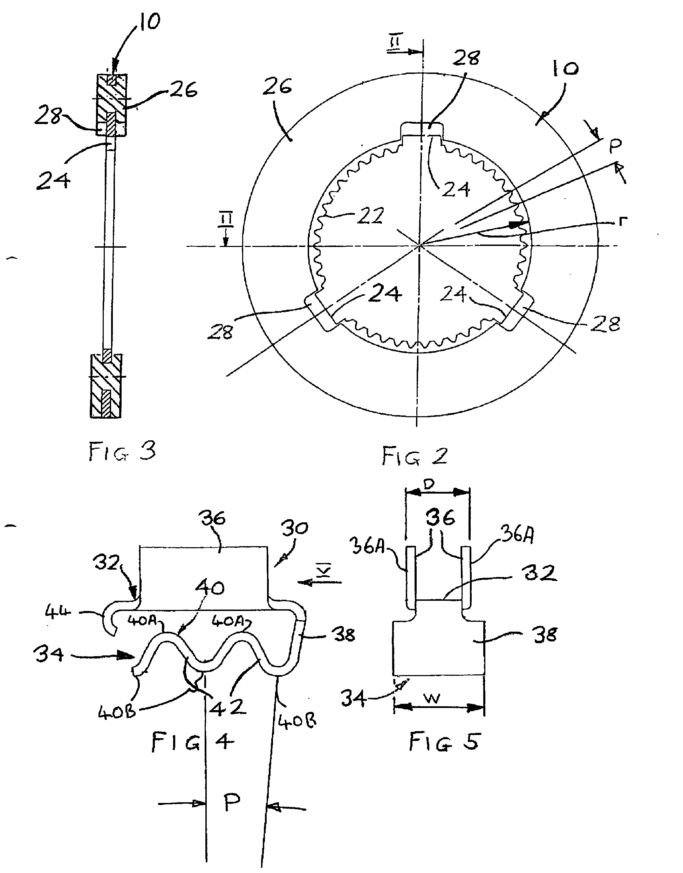

Each of the brake discs 10 is of the form shown in Figs 2 and 3. It will be noted that the disc 10 in Figs 2 and 3 is of annular form and is formed with internal splines 22. The disc 10 is also formed with three radially extending recesses 24 which are equi-spaced circumferentially of the disc. The disc 10 carries an annulus of friction material 26 on each side. The friction material is also formed with recesses 28 which are radially deeper than the recesses 24.

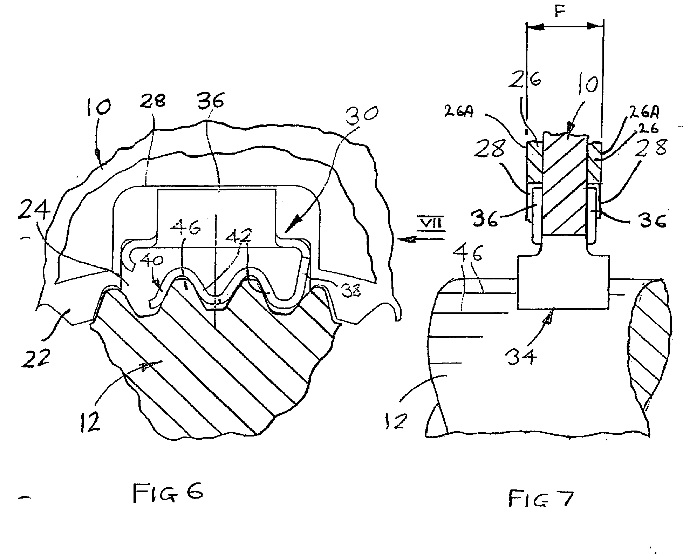

A resilient device in the form of a spring clip 30 is illustrated in Figs 4 and 5. The clip 30 is made from a resilient sheet material, in this case spring sheet steel. The clip 30 has a mounting portion 32 and two flanges 36 each bent in a first (upward) direction from the mounting portion. The flanges are substantially parallel and are spaced apart from each other by the mounting portion. The flanges and mounting portions together form a substantially U-shaped profile (see especially figure 5). The clip 30 further includes an arm 34 which is bent in a second (downwards), opposite, direction from the mounting portion. The arm has a downwardly extending part 38 and a part 40 formed with waves 42. Part 40 includes wave crests 40A and wave troughs 40B. The arm is bent through substantially 180 degrees so that part 40 of the arm lie adjacent to the mounting portion 32

Each flange 36 has an outwardly orientated flange 36A, which are spaced apart by distance D which is less than the width W of the arm 34.

The clip 30 also includes return 44 (also known as a further arm) at an opposite end of the mounting portion 32 from arm 34. Return 44 is bent in the same direction as arm 34, and therefore is bent in an opposite direction to flanges 36.

As shown in Figs 6 and 7, the clip 30 mounts on the brake disc 10 by inserting the clip into the recess 24 and positioning the flanges 36 of the clip 30 one each side of the disc 10. In that position, the flanges 36 lie in the recesses 28 in the friction material 26. When the clip 30 is inserted in the recess 24, the return 44 and the top end of the downwardly extending part 38 of the arm 34 grip the radial edges of the recess 24 frictionally to hold the clip 30 in place on the disc. Alternatively, or additionally, the flanges could act to provide a grip on the brake disc to hold the clip 30 in place on the disc.

Each anulus of friction material 26 has an outwardly facing surface 26A which are spaced apart by a distance F, which is greater than the spacing apart of the outwardly facing surfaces 36A of the flanges (see figure 7). This allows the inner radius r of the friction material to be at a smaller radius than the flanges whilst ensuring the flanges do not frictionally engage and score the brake surfaces.

It should be noted that the waves 42 have a pitch P substantially identical to that of the splines 22 but project inwardly slightly further than the splines 22 when the clip 30 is positioned in the recess 24 in the absence of the shaft.

With all three clips 30 in position, the internal splines 22 of the disc 10 are positioned so as to mate with splines 46 of transmission shaft 12 and the disc is then slid into position on the shaft 12. The splines 46 are shown diagrammatically in Fig 7. It will be noted that the pitch P of the waves 42 of part 40 is the same as that of the splines 46. When the splines 46 come into contact with the waves 42, the wavy part 40 is urged resiliently outwards away from the shaft 12 and the resilience creates a frictional grip on the splines 46 of shaft 12. The frictional grip of the wavy part 40 on the splines 46 effectively tightens the splined connection between the disc 10 and the shaft 12. In that way, the clips 30 help to prevent free relative movement in a rotational sense taking place between the disc 10 and the shaft 12 and therefore between the mating splines 22, 46. In that way the effect of play between the mating splines is reduced. As mentioned above, play between the mating splines will usually lead to a noisy splined interconnection. However, it has been found that the use of the clips 30 significantly reduces the likelihood of such noise occurring.

Therefore, the invention is very useful in minimising noise in a splined connection and makes the selection of clearances to achieve a quiet connection less critical.

Note that in further embodiments, brake discs, or clutch discs, can be externally splined and the resilient element is equally applicable to such an externally splined disc as to the internally splined disc shown in figure 2.

## Claims

1. A resilient device (30) made from a resilient sheet material, the device having a mounting portion (32) having opposing first and second sides, and opposing first and second ends, and two flanges (36), extending from said first and second sides of the mounting portion (32), each bent in a first direction from the mounting portion, the flanges being substantially parallel and being spaced apart from each other by the mounting portion, the flanges and mounting portion together forming a substantially U-shaped profile, the device further including an arm (34) bent in a second, opposite, direction from the mounting portion, through substantially 180° to lie adjacent and parallel to the mounting portion, the arm having a wavy shape having at least a crest portion (40A) and at least a trough portion (40B), **characterised in that** said arm (34) being a direct extension of an end of the mounting portion (34).

2. A resilient device as defined in claim 1 in which the arm has two or more crest portions (40A).

3. A resilient device as defined in claim 1 in which the arm has two or more trough portions (40B).

4. A resilient device as defined in claim 1 in which the device includes a further arm (44) bent in said second, opposite, direction.

5. A resilient device as defined in claim 1 in which each flange (36) has an outwardly facing surface (36A) and the arm has a width (W) and the outwardly facing surfaces are spaced apart by a distance (D) less than the width (W) of the arm.

6. A brake disc assembly including a brake disc (10) having a series of disc splines, the series of disc splines being interrupted by a recess (24), the brake disc assembly further including a resilient device (30) as defined in claim 1.

7. A brake disc assembly as defined in claim 6 in which the mounting portion (32) of the resilient device is arranged to fit within the recess (24).

8. A brake disc assembly as defined in claim 6 in which the flanges (36) are arranged to extend one on each side of the brake disc (10) so as to locate the resilient device (30) on the brake disc.

9. A brake disc assembly as defined in any one of claims 6 to 8 in which a portion (44, 38: 36, 36) of the resilient device grips the brake disc so as to hold the resilient device thereon.

10. A brake disc assembly as defined in claim 6 in which the brake disc includes an anulus of friction material on each side, each anulus of friction material having a recess (28) wherein each flange locates in a corresponding recess of each anulus.

11. A brake disc assembly as defined in claim 10 in which each anulus of friction material has an outwardly facing surface and each flange has an outwardly facing surface (26A) and the outwardly facing surfaces of the friction material are spaced apart by a distance (F) greater than the distance (D) by which the outwardly facing surfaces (36A) of the flanges (36) are spaced apart.

12. A brake disc assembly as defined in claim 6 in which a plurality of resilient devices (30) according to any one of claims 1 to 5 are provided for positioning in a substantially equi-spaced manner around the brake disc.

13. An assembly including a shaft (12) and a brake disc assembly as defined in claim 6, the shaft having a series of shaft splines (46) in engagement with the series of disc splines (22), the resilient device being mounted such that the arm engages one or more of the shaft splines in resilient contact.

14. The assembly as defined in claim 13 in which the resilient contact is such as to facilitate relative movement between the disc and shaft in the direction of the disc and shaft splines.

15. The assembly as defined in claim 13 or 14 in which the arm has at least two crest portions or at least two trough portions, thereby defining a pitch (P) of the arm, the series of shaft splines defining a pitch (P) of the shaft splines and the pitch (P) of the arm is substantially the same as the pitch (P) of the shaft splines.

## Patentansprüche

1. Federnde Vorrichtung (30) aus einem federnden Plattenmaterial, wobei die Vorrichtung einen Montageabschnitt (32) mit einer gegenüberliegenden ersten und zweiten Seite, einem gegenüberliegenden ersten und zweiten Ende sowie mit zwei Flanschen (36) hat, die sich von der ersten und der zweiten Seite des Montageabschnitts (32) aus erstrecken, wobei jeder Flansch vom Montageabschnitt aus in einer ersten Richtung gebogen ist, wobei die Flansche im Wesentlichen parallel vorgesehen und durch den Montageabschnitt voneinander beabstandet sind, wobei die Flansche und der Montageabschnitt zusammen ein im Wesentlichen U-förmiges Profil bilden, wobei die Vorrichtung weiterhin einen Arm (34) beinhaltet, der vom Montageabschnitt aus in einer zweiten entgegengesetzten Richtung in einem im Wesentlichen 180° betragenden Winkel gebogen ist, so dass er angrenzend an den Montageabschnitt und parallel dazu angeordnet ist, wobei der Arm eine wellenartige Form mit mindestens einem Kammabschnitt (40A) und mindestens einem Muldenabschnitt (40B) hat, **dadurch gekennzeichnet, dass** der Arm (34) eine direkte Erweiterung eines Endes des Montageabschnitts (34) darstellt.

2. Federnde Vorrichtung nach Anspruch 1, bei der der Arm zwei oder mehr Kammabschnitte (40A) hat.

3. Federnde Vorrichtung nach Anspruch 1, bei der der Arm zwei oder mehr Muldenabschnitte (40B) hat.

4. Federnde Vorrichtung nach Anspruch 1, wobei die Vorrichtung einen in der zweiten entgegengesetzten Richtung gebogenen weiteren Arm (44) beinhaltet.

5. Federnde Vorrichtung nach Anspruch 1, bei der jeder Flansch (36) eine nach außen gewandte Oberfläche (36A) und der Arm eine Breite (W) hat, und wobei die nach außen gewandten Oberflächen um eine Distanz (D), die geringer als die Breite (W) des Arms ist, voneinander beabstandet sind.

6. Bremsscheibeneinheit mit einer Bremsscheibe (10), die eine Reihe von Scheibenkeilverzahnungen hat, wobei die Reihe von Scheibenkeilverzahnungen durch einen Rücksprung (24) unterbrochen sind, wobei die Bremsscheibeneinheit weiterhin eine federnde Vorrichtung (30) nach Anspruch 1 beinhaltet.

7. Bremsscheibeneinheit nach Anspruch 6, bei der der Montageabschnitt (32) der federnden Vorrichtung so angeordnet ist, dass er in den Rücksprung (24) passt.

8. Bremsscheibeneinheit nach Anspruch 6, bei der die Flansche (36) so angeordnet sind, dass sich jeweils einer auf jeder Seite der Bremsscheibe (10) erstreckt, um so die federnde Vorrichtung (30) an der Bremsscheibe anzuordnen.

9. Bremsscheibeneinheit nach einem der Ansprüche 6 bis 8, bei der ein Abschnitt (44, 38; 36, 36) der federnden Vorrichtung die Bremsscheibe ergreift, um die federnde Vorrichtung daran festzuhalten.

10. Bremsscheibeneinheit nach Anspruch 6, bei der die Bremsscheibe einen Ring aus Reibungsmaterial auf jeder Seite beinhaltet, wobei jeder Ring aus Reibungsmaterial einen Rücksprung (28) hat, wobei jeder Flansch in einem entsprechenden Rücksprung eines jeden Rings angeordnet ist.

11. Bremsscheibeneinheit nach Anspruch 10, bei der jeder Ring aus Reibungsmaterial eine nach außen gewandte Oberfläche und jeder Flansch eine nach außen gewandte Oberfläche (26A) hat, und wobei die nach außen gewandten Oberflächen des Reibungsmaterials um eine Distanz (F) voneinander beabstandet sind, die größer als die Distanz (D) ist, um die die nach außen gewandten Oberflächen (36A) der Flansche (36) voneinander beabstandet sind.

12. Bremsscheibeneinheit nach Anspruch 6, bei der mehrere der federnden Vorrichtungen (30) nach einem der Ansprüche 1 bis 5 für eine Positionierung in einer im Wesentlichen gleichbeabstandeten Weise um die Bremsscheibe herum vorgesehen sind.

13. Einheit mit einer Welle (12) und einer in Anspruch 6 definierten Bremsscheibeneinheit, wobei die Welle eine Reihe von Wellenkeilverzahnungen (46) hat, die in Eingriff mit der Reihe von Scheibenkeilverzahnungen (22) stehen, wobei die federnde Vorrichtung so montiert ist, dass der Arm mit einer oder mehreren der Wellenkeilverzahnungen in federndem Kontakt steht.

14. Einheit nach Anspruch 13, bei der der federnde Kontakt so beschaffen ist, dass eine relative Bewegung zwischen der Scheibe und der Welle in der Richtung der Scheiben- und Wellenkeilverzahnungen ermöglicht wird.

15. Einheit nach Anspruch 13 oder 14, bei der der Arm mindestens zwei Kammabschnitte oder mindestens zwei Muldenabschnitte hat, wodurch eine Steigung (P) des Arms definiert wird, wobei die Reihen von Wellenkeilverzahnungen eine Steigung (P) der Wellenkeilverzahnungen definieren und die Steigung (P) des Arms im Wesentlichen der Steigung (P) der Wellenkeilverzahnungen entspricht.

## Revendications

1. Dispositif élastique (30) fabriqué en un matériau élastique en feuille, le dispositif ayant une portion de montage (32) ayant des premier et deuxième côtés opposés, et des première et deuxième extrémités opposées, et deux brides (36) s'étendant depuis lesdits premier et deuxième côtés de la portion de montage (32), chaque bride étant repliée dans une première direction depuis la portion de montage, les brides étant substantiellement parallèles et étant espacées l'une de l'autre par la portion de montage, les brides et la portion de montage formant ensemble un profilé substantiellement en forme de U, le dispositif comportant en outre un bras (34) replié dans une deuxième direction opposée depuis la portion de montage, suivant un angle de substantiellement 180° de manière à s'étendre à côté et parallèlement à la portion de montage, le bras ayant une forme ondulée avec au moins une portion de crête (40A) et au moins une portion d'auge (40B), **caractérisé en ce que** ledit bras (34) est dans le prolongement direct d'une extrémité de la portion de montage (34).

2. Dispositif élastique selon la revendication 1, dans lequel le bras a deux portions de crête (40A) ou plus.

3. Dispositif élastique selon la revendication 1, dans lequel le bras a deux portions d'auge (40B) ou plus.

4. Dispositif élastique selon la revendication 1, dans lequel le dispositif comporte un bras supplémentaire (44) replié dans ladite deuxième direction opposée.

5. Dispositif élastique selon la revendication 1, dans lequel chaque bride (36) a une surface tournée vers l'extérieur (36A) et le bras a une largeur (W) et les surfaces tournées vers l'extérieur sont espacées l'une de l'autre d'une distance (D) inférieure à la largeur (W) du bras.

6. Ensemble de disque de frein comportant un disque de frein (10) ayant une série de cannelures de disque, la série de cannelures de disque étant interrompue par un retrait (24), l'ensemble de disque de frein comportant en outre un dispositif élastique (30) tel que défini dans la revendication 1.

7. Ensemble de disque de frein selon la revendication 6, dans lequel la portion de montage (32) du dispositif élastique est arrangée de manière à s'ajuster dans le retrait (24).

8. Ensemble de disque de frein selon la revendication 6, dans lequel les brides (36) sont arrangées de manière à s'étendre à raison d'une de chaque côté du disque de frein (10) de manière à disposer le dispositif élastique (30) sur le disque de frein.

9. Ensemble de disque de frein selon l'une quelconque des revendications 6 à 8, dans lequel une portion (44, 38 ; 36, 36) du dispositif élastique saisit le disque de frein de manière à retenir le dispositif élastique dessus.

10. Ensemble de disque de frein selon la revendication 6, dans lequel le disque de frein comporte un anneau de matériau de friction de chaque côté, chaque anneau de matériau de friction ayant un retrait (28), et chaque bride se positionne dans un retrait correspondant de chaque anneau.

11. Ensemble de disque de frein selon la revendication 10, dans lequel chaque anneau de matériau de friction a une surface tournée vers l'extérieur et chaque bride a une surface tournée vers l'extérieur (26A) et les surfaces tournées vers l'extérieur du matériau de friction sont espacées l'une de l'autre d'une distance (F) supérieure à la distance (D) séparant les surfaces tournées vers l'extérieur (36A) des brides (36).

12. Ensemble de disque de frein selon la revendication 6, dans lequel une pluralité de dispositifs élastiques (30) selon l'une quelconque des revendications 1 à 5 sont prévus pour se positionner de manière substantiellement équidistante autour du disque de frein.

13. Ensemble comportant un arbre (12) et un ensemble de disque de frein selon la revendication 6, l'arbre ayant une série de cannelures d'arbre (46) en prise avec la série de cannelures de disque (22), le dispositif élastique étant monté de telle sorte que le bras s'engage avec une ou plusieurs des cannelures d'arbre en contact élastique.

14. Ensemble selon la revendication 13, dans lequel le contact élastique est tel qu'il facilite un mouvement relatif entre le disque et l'arbre dans la direction des cannelures du disque et de l'arbre.

15. Ensemble selon la revendication 13 ou 14, dans lequel l'arbre a au moins deux portions de crête ou au moins deux portions d'auge, définissant ainsi un pas (P) du bras, la série de cannelures d'arbre définissant un pas (P) des cannelures d'arbre et le pas (P) du bras étant substantiellement le même que le pas (P) des cannelures d'arbre.
